# EUROPEAN PATENT SPECIFICATION

(11) **EP 4 261 943 B1**
(45) Date of publication and mention of the grant of the patent: **04.11.2026**
(21) Application number: 22825221.9
(22) Date of filing: 09.06.2022
(51) Int. Cl.: H01M 4/36, H01M 4/525, H01M 4/505, H01M 4/131, H01M 10/052, H01M 4/02

(54) **CATHODE ACTIVE MATERIAL FOR LITHIUM SECONDARY BATTERY, AND CATHODE COMPOSITE MATERIAL, CATHODE, AND LITHIUM SECONDARY BATTERY COMPRISING SAME**
KATHODENAKTIVMATERIAL FÜR LITHIUMSEKUNDÄRBATTERIE UND KATHODENVERBUNDSTOFF, KATHODE UND LITHIUMSEKUNDÄRBATTERIE DAMIT
MATÉRIAU ACTIF DE CATHODE POUR UNE BATTERIE SECONDAIRE AU LITHIUM, ET MATÉRIAU COMPOSITE DE CATHODE, CATHODE ET BATTERIE SECONDAIRE AU LITHIUM LE COMPRENANT

(30) Priority: 17.06.2021 KR 20210079001
(43) Date of publication of application: 18.10.2023
(73) Proprietor: LG Energy Solution, Ltd., Seoul 07335 (KR)
(72) Inventor: HAN, Gi-Beom, Daejeon 34122 (KR); KIM, Jong-Woo, Daejeon 34122 (KR); LHO, Eun-Sol, Daejeon 34122 (KR); PARK, Kang-Joon, Daejeon 34122 (KR); KWAK, Min, Daejeon 34122 (KR); KIM, Seul-Ki, Daejeon 34122 (KR); KIM, Hyeong-Il, Daejeon 34122 (KR); PARK, Sang-Min, Daejeon 34122 (KR); LEE, Sang-Wook, Daejeon 34122 (KR); JUNG, Wang-Mo, Daejeon 34122 (KR)
(74) Representative: Hoffmann Eitle
(86) International application number: PCT/KR2022/008161
(87) International publication number: WO 2022/265296

(56) References cited:
- EP-A1- 3 764 438
- WO-A1-2019/187538
- WO-A1-2020/003642
- CN-A- 111 384 372
- JP-A- 2013 246 936
- KR-A- 20190 059 249
- KR-A- 20200 001 230
- KR-B1- 101 109 068

## Description

### TECHNICAL FIELD

The present disclosure relates to a positive electrode active material comprising nickel containing lithium transition metal oxide particles having different average particle sizes and a positive electrode material mixture, and a positive electrode and a lithium secondary battery comprising the same.

### BACKGROUND ART

Recently, with the rapid widespread use of electronic devices using batteries, for example, mobile phones, laptop computers and electric vehicles, there is a fast growing demand for secondary batteries with small size, light weight and relatively high capacity. In particular, lithium secondary batteries are gaining attention as a power source for driving mobile devices due to their light weight and high energy density advantages. Accordingly, there are many research and development efforts to improve the performance of lithium secondary batteries.

A lithium secondary battery includes an organic electrolyte solution or a polymer electrolyte solution filled between a positive electrode and a negative electrode made of an active material capable of intercalating and deintercalating lithium ions, and electrical energy is produced by oxidation and reduction reactions during the intercalation/deintercalation of lithium ions at the positive electrode and the negative electrode.

The positive electrode active material of the lithium secondary battery includes lithium cobalt oxide (LiCoO₂), nickel-based lithium transition metal oxide, lithium manganese oxide (LiMnO₂ or LiMn₂O₄) and a lithium iron phosphate compound (LiFePO₄). Among them, lithium cobalt oxide (LiCoO₂) is widely used due to its high operating voltage and large capacity advantages, and has high-voltage positive electrode active material applications. However, cobalt (Co) has a limitation on the use in a large amount as a power source in the field of electric vehicles due to its price rise and unstable supply, and thus the need arises for the development of alternative positive electrode active materials, and in particular, Ni-rich lithium composite transition metal oxide positive electrode active materials attract attention due to their high capacity.

The nickel containing lithium composite transition metal oxide positive electrode active materials currently available in the market comprise secondary particles formed by agglomeration of primary microparticles having the average particle size D50 on a few hundreds of nm level, and to increase the output and the compaction density, bimodal-type positive electrode active materials including a mixture of two types of secondary particles having different average particle sizes D50, i.e., secondary macroparticles having a larger average particle size and secondary microparticles having a smaller average particle size are commonly used.

The secondary particles formed by agglomeration of primary microparticles have a large specific surface area and a low particle strength. Accordingly, in the rolling process of electrodes comprising the bimodal-type positive electrode active materials, severe cracking occurs especially in secondary macroparticles, causing the production of gas in large amounts during cell operation, resulting in low stability. In the case of high-Ni lithium transition metal oxide having high nickel content to ensure high capacity, when particle cracking occurs due to its structural problem, the chemical stability gets worse and it is difficult to ensure the thermal stability.

Meanwhile, when preparing a positive electrode material mixture using the bimodal-type positive electrode active material comprising the mixture of the macroparticles having a larger average particle size and the microparticles having a smaller average particle size, the optimal amount of conductive materials necessary for the macroparticles is different from the optimal amount of conductive materials necessary for the microparticles. That is, the microparticles having a smaller average particle size need a larger amount of conductive materials. When the amount of conductive materials is appropriately adjusted on the basis of the macroparticles, the microparticles comprise a smaller amount of conductive materials than required, and on the contrary, when the amount of conductive materials is appropriately adjusted on the basis of the microparticles, the macroparticles comprise a larger amount of conductive materials than required. Accordingly, there is a difference in resistance between the positive electrode active materials, causing local degradation, eventually resulting in the degradation of the entire positive electrode material.

CN 111384372 A describes a positive electrode material that comprises a lithium-nickel transition metal oxide A and a lithium-nickel transition metal oxide B. The lithium-nickel transition metal oxide A is secondary particles having the formula Liₐ₁(Ni_{b1}Co_{c1}Mn_{d1})ₓ₁M₁₋ₓ₁O₂₋ₑ₁Xₑ₁ where 0.95≤a1≤1.05, 0.7≤b1≤0.98, 0.01≤c1≤0.15, 0.01≤d1≤0.3, 0.95≤x1≤1, and 0≤e1≤0.1, M is selected from one or more of Al, Ti, Zr, Nb, Sr, Sc, Sb, Y, Ba, B, C, Co, and Mn, X is selected from F and/or Cl; and the lithium-nickel transition metal oxide B is of a single crystal structure or a single crystal-like structure having the formula Liₐ₂(Ni_{b2}Co_{c2}Mn_{d2})ₓ₂M'₁₋ₓ₂O₂₋ₑ₂X'ₑ₂ where 0.95<a2<1.05, 0.7<b2<0.98, 0.01≤c2≤0.15, 0.01≤d2≤0.3, 0.95≤x2≤1, and 0≤e2≤0.1, M' and X' are as defined for M and X, respectively. The crystal size D104 of the positive electrode material and the particle size distribution change rate ΔPSD of the positive electrode material meet the condition that 50 nm ≤ D104 × ΔPSD ≤ 600 nm.

WO 2019/187538 A1 describes a non-aqueous electrolyte secondary battery that includes a positive electrode, a negative electrode and a non-aqueous electrolyte. The positive electrode includes lithium composite oxide particles A and B, which include Ni and Mn. The lithium composite oxide particles A are composed of secondary particles a2, which are agglomerates of primary particles a1, and include at least one of zirconium and boron. The lithium composite oxide particles B are composed of at least one of primary particles b1, which have a larger diameter than the primary particles a1, and secondary particles b2, which are agglomerates of the primary particles b1 and have a smaller diameter than the secondary particles a2. The contained ratio of the lithium composite oxide particles A to the lithium composite oxide particles B by mass is in the range of 8:2 to 4:6.

KR 2020-0001230 A describes a bimodal-type positive electrode active material for a lithium ion battery that includes a mixture of layered LiCoO₂ large particles and LiCoₓMn_{y}Fe_{z}PO₄ small particles with a manganese-based olivine structure where 0≤x≤1, 0<y≤1, 0≤z≤1, and x+y+z=1.

### DISCLOSURE

### Technical Problem

An aspect of the present disclosure is directed to providing a positive electrode active material for a lithium secondary battery comprising positive electrode active material macroparticles and positive electrode active material microparticles having different average particle sizes for preventing cracking in a rolling process, improving the life characteristics and preventing degradation by reducing a resistance difference between the positive electrode active materials having difference average particle sizes.

Another aspect of the present disclosure is directed to providing a positive electrode material mixture, a positive electrode and a lithium secondary battery comprising the positive electrode active material for a lithium secondary battery having the above-described features.

### Technical Solution

An aspect of the present disclosure provides a positive electrode active material for a lithium secondary battery according to the following embodiment.

A first embodiment relates to the positive electrode active material for a lithium secondary battery comprising a mixture of microparticles having a predetermined average particle size D50 and macroparticles having a larger average particle size D50 than the microparticles, wherein the microparticles have the average particle size D50 of 1 to 10 *µ*m and are at least one selected from the group consisting of particles having a carbon material coating layer on all or part of a surface of primary macroparticles having an average particle size D50 of 1 *µ*m or more, particles having a carbon material coating layer on all or part of a surface of secondary particles formed by agglomeration of the primary macroparticles, and a mixture thereof, the macroparticles are secondary particles having an average particle size D50 of 5 to 20 *µ*m formed by agglomeration of primary microparticles having a smaller average particle size D50 than the primary macroparticles, **and the** primary macroparticles and the primary microparticles comprise a nickel-based lithium transition metal oxide, wherein D50 corresponds to 50% of cumulative volume as determined in accordance with the method described below.

A second embodiment relates to the positive electrode active material for a lithium secondary battery according to the first embodiment, wherein the average particle size D50 of the primary macroparticles is 1 to 3 *µ*m, and the average particle size D50 of the microparticles is 3 to 8 *µ*m.

A third embodiment relates to the positive electrode active material for a lithium secondary battery according to the first or second embodiment, wherein an average crystallite size of the primary macroparticles is 150 nm or more as determined in accordance with the method described below.

A fourth embodiment relates to the positive electrode active material for a lithium secondary battery according to any one of the first to third embodiments, wherein the average particle size D50 of the primary microparticles is 100 to 900 nm.

A fifth embodiment relates to the positive electrode active material for a lithium secondary battery according to any one of the first to fourth embodiments, wherein the average particle size D50 of the macroparticles : the average particle size D50 of the microparticles is 5:1 to 2:1.

A sixth embodiment relates to the positive electrode active material for a lithium secondary battery according to any one of the first to fifth embodiments, wherein the microparticles are present in an amount of 10 to 100 parts by weight based on 100 parts by weight of the macroparticles.

A seventh embodiment relates to the positive electrode active material for a lithium secondary battery according to any one of the first to sixth embodiments, wherein the carbon material coating layer is present in an amount of 0.05 to 10 parts by weight based on 100 parts by weight of the primary macroparticles.

An eighth embodiment relates to the positive electrode active material for a lithium secondary battery according to any one of the first to seventh embodiments, wherein the nickel-based lithium transition metal oxide is represented by LiₐNi_{1-b-c-d}Co_{b}Mn_{c}Q_{d}O_{2+δ} (1.0≤a≤1.5, 0<b≤0.5, 0<c≤0.5, 0≤d≤0.1, 0<b+c+d≤0.5, -0.1≤δ≤1.0, Q is at least one type of metal element selected from the group consisting of Al, Mg, V, Ti and Zr.

A ninth embodiment provides a positive electrode material mixture for a lithium secondary battery comprising the positive electrode active material and a conductive material.

A tenth embodiment relates to the positive electrode material mixture for a lithium secondary battery according to the ninth embodiment, wherein the conductive material is present in an amount of 1 to 30 weight% based on the total weight of the positive electrode material mixture.

An eleventh embodiment provides a positive electrode for a lithium secondary battery comprising the positive electrode material mixture.

A twelfth embodiment provides a lithium secondary battery comprising the positive electrode.

### Advantageous Effects

The positive electrode active material according to an embodiment of the present disclosure comprises both the macroparticles and the microparticles and thus has high compaction density. Additionally, in the microparticles comprising the primary macroparticles and the carbon material coating layer on the surface, during rolling, some of the primary macroparticles of the microparticles are detached and separated before cracking occurs in the secondary macroparticles or the carbon material coating layer coated on the surface serves to reduce the friction at the contact surface between the particles, thereby reducing the cracking in the macroparticles. Accordingly, it is possible to improve the life characteristics of the lithium secondary battery comprising the positive electrode active material of the present disclosure.

Additionally, since the carbon material coating layer on the surface of the microparticles improves the electrical conductivity of the microparticles, it is possible to reduce the optimal amount of conductive materials necessary for the microparticles. That is, it is possible to reduce the optimal amount of conductive materials necessary for the microparticles to the equal or similar level to the optimal amount of conductive materials necessary for the macroparticles. Accordingly, it is possible to reduce the resistance difference between the macroparticles and the microparticles having different average particle sizes, thereby preventing degradation of the positive electrode material.

### DESCRIPTION OF DRAWINGS

The accompanying drawings illustrate an exemplary embodiment of the present disclosure, and together with the detailed description, serve to help a further understanding of the technical aspects of the present disclosure, so the present disclosure should not be construed as being limited to the drawings. Meanwhile, the shape, size, scale or proportion of the elements in the accompanying drawings may be exaggerated to emphasize a more clear description.
FIG. 1 is a Scanning Spreading Resistance Microscopy (SSRM) image of a positive electrode comprising a positive electrode active material of comparative example 1 in cross section.
FIG. 2 an SSRM image of a positive electrode comprising a positive electrode active material of example 1 in cross section.

### BEST MODE

Hereinafter, an embodiment of the present disclosure will be described in detail. Prior to the description, it should be understood that the terms or words used in the specification and the appended claims should not be construed as limited to general and dictionary meanings, but interpreted based on the meanings and concepts corresponding to technical aspects of the present disclosure, on the basis of the principle that the inventor is allowed to define terms appropriately for the best explanation. Therefore, the disclosure of the embodiments described herein is just an exemplary embodiment of the present disclosure, but not intended to fully describe the technical aspects of the present disclosure. The invention is set out in the appended set of claims.

Unless the context clearly indicates otherwise, it will be understood that the term "comprises" when used in this specification, specifies the presence of stated elements, but does not preclude the presence or addition of one or more other elements.

In the specification and the appended claims, "comprising multiple crystal grains" refers to a crystal structure formed by two or more crystal grains having a specific range of average crystallite sizes. In this instance, the crystallite size of the crystal grain may be quantitatively analyzed using X-ray diffraction analysis (XRD) by Cu Kα X-ray (Xrα). Specifically, the average crystallite size of the crystal grains may be quantitatively analyzed by putting the prepared particles into a holder and analyzing diffraction grating for X-ray radiation onto the particles.

In the specification and the appended claims, D50 is defined as a particle size at 50% of particle size distribution, and may be measured using a laser diffraction method. For example, a method for measuring the average particle size D50 of a positive electrode active material may include dispersing particles of the positive electrode active material in a dispersion medium, introducing into a commercially available laser diffraction particle size measurement device (for example, Microtrac MT 3000), irradiating ultrasound of about 28 kHz with the output power of 60W, and calculating the average particle size D50 corresponding to 50% of cumulative volume in the measurement device.

In the present disclosure, 'primary particle' refers to a particle of which grain boundaries are seemingly absent when observed with the field of view of 5000 to 20000 magnification using a scanning electron microscope.

In the present disclosure, 'secondary particle' is a particle formed by agglomeration of the primary particles.

In the present disclosure, 'monolith' refers to a particle that exists independently of the secondary particle, and of which grain boundaries are seemingly absent, and for example, it is a particle having the particle diameter of 0.5 *µ*m or more.

In the present disclosure, 'particle' may encompass any one of the monolith, the secondary particle and the primary particle or all of them.

In the present disclosure, 'positive electrode material mixture' may refer to a mixture of positive electrode active material particles and a conductive material, and additionally a binder, to form a positive electrode active material layer.

According to an aspect of the present disclosure, there is provided a positive electrode active material for a lithium secondary battery comprising:
a mixture of microparticles having a predetermined average particle size D50 and macroparticles having a larger average particle size D50 than the microparticles,
wherein the microparticles have an average particle size (D50) of 1 to 10 *µ*m and are at least one selected from the group consisting of particles having a carbon material coating layer on all or part of the surface of primary macroparticles having an average particle size (D50) of 1 *µ*m or more, particles having a carbon material coating layer on all or part of the surface of secondary particles formed by agglomeration of the primary macroparticles, and a mixture thereof,
the macroparticles are secondary particles having an average particle size (D50) of 5 to 20 *µ*m formed by agglomeration of primary microparticles having a smaller average particle size (D50) than the primary macroparticles, and
the primary macroparticles and the primary microparticles comprise a nickel-based lithium transition metal oxide.

### Microparticles

The positive electrode active material of the present disclosure comprises microparticles having the average particle size D50 of 1 to 10 *µ*m, for example, at least one selected from the group consisting of particles having a carbon material coating layer on all or part of the surface of primary macroparticles having the average particle size D50 of 1 *µ*m or more, particles having a carbon material coating layer on all or part of the surface of secondary particles formed by agglomeration of the primary macroparticles, and a mixture thereof.

The primary macroparticles are a nickel-based lithium transition metal oxide positive electrode active material, specifically, represented by LiₐNi_{1-b-c-d}Co_{b}Mn_{c}Q_{d}O_{2+δ} (1.0≤a≤1.5, 0<b≤0.5, 0<c≤0.5, 0≤d≤0.1, 0<b+c+d≤0.5, -0.1≤δ≤1.0, Q is at least one type of metal element selected from the group consisting of Al, Mg, V, Ti and Zr).

The positive electrode active material comprises the microparticles and macroparticles as described below together, leading to improved compaction density.

In the microparticles according to an aspect of the present disclosure, specifically, the average particle size D50 of the primary macroparticles may be 1 to 3 *µ*m, and the average particle size D50 of the microparticles may be 3 to 8 *µ*m.

When compared with primary microparticles that form the conventional secondary macroparticles as described below, the primary macroparticles have the simultaneous growth of the average particle size and the average crystallite size of primary particles.

From the perspective of crack, a seemingly absent grain boundary and a large average particle size like the monolith are advantageous. In case that only the average particle size D50 of the primary particles is increased by over-sintering, rock salt is formed on the surface of the primary particles and the initial resistance increases. Growing the crystallite size of the primary particles together reduces the resistance. Accordingly, the primary macroparticles according to an embodiment of the present disclosure are particles having a large average particle size as well as a large average crystallite size, and of which grain boundaries are seemingly absent.

The simultaneous growth of the average particle size and the average crystallite size of the primary particles reduces the resistance compared to the monolith having a large resistance increase due to the rock salt formed on the surface by the sintering at high temperature, and it is advantageous in terms of long life.

Compared to the monolith, the microparticles comprising the "primary macroparticles" used in an aspect of the present disclosure, their agglomerate or a mixture thereof are advantageous in terms of low resistance due to the increased size of the primary particles per se and the reduced rock salt formation.

In this instance, the average crystallite size of the primary macroparticles may be quantitatively analyzed using X-ray diffraction analysis (XRD) by Cu Kα X-ray. Specifically, the average crystallite size of the primary macroparticles may be quantitatively analyzed by putting the prepared particles into a holder and analyzing diffraction grating for X-ray radiation onto the particles. The average crystallite size of the primary macroparticles may be 150 nm or more, specifically 200 nm or more, and more specifically 250 nm or more.

Meanwhile, in case that the microparticles comprise particles in the form of primary macroparticles, the primary macroparticles have the carbon material coating layer on the surface, and the carbon material coating layer is formed on all or part of the surface of the primary macroparticles. Additionally, in case that the microparticles comprise particles in the form of secondary particles formed by agglomeration of the primary macroparticles, the carbon material coating layer is formed on all or part of the surface of the secondary particles, and an embodiment of the carbon material coating layer encompasses the carbon material coating layer connected to fill the void between the primary macroparticles.

The carbon material coating layer on the surface of the microparticles improves the electrical conductivity of the microparticles, thereby reducing the optimal amount of conductive materials necessary for the microparticles. That is, the optimal amount of conductive materials necessary for the microparticles may be reduced to the equal or similar level to the optimal amount of conductive materials necessary for the macroparticles as described below. Accordingly, it is possible to reduce the resistance difference between the positive electrode active material macroparticles and the positive electrode active material microparticles having different average particles sizes, thereby preventing degradation of the positive electrode material.

Meanwhile, the agglomerate particles of the primary macroparticles having the carbon material coating layer have weaker bond strength between the primary macroparticles than the force applied to break the secondary macroparticles. Accordingly, in the rolling process, the agglomerates of the primary macroparticles are separated before cracking in the macroparticles, thereby reducing the cracking in the macroparticles. Additionally, the carbon material layer coated on the surface serves to reduce the friction at the contact surface between the particles, thereby reducing cracking in the macroparticles and the microparticles. The separated primary macroparticles are invulnerable to cracks due to their high strength, and as opposed to the primary microparticles that form the macroparticles, the carbon material coating layer reduces the degradation of the life characteristics caused by the exposed surface.

The carbon material coating layer may comprise, without limitation, any type of carbon material capable of conducting the flow of electrons. Specific examples of the carbon material may include, but is not limited to, graphite, for example, natural graphite or artificial graphite; and carbon-based materials, for example, carbon black, acetylene black, ketjen black, channel black, furnace black, lamp black, thermal black and carbon fibers.

Additionally, the carbon material coating layer may be present in an amount of 0.05 to 10 parts by weight based on 100 parts by weight of the primary macroparticles, but is not limited thereto, and the amount of the carbon material coating layer may be adjusted to reduce down to the equal or similar level to the optimal amount of conductive materials necessary for the macroparticles.

### Macroparticles

In addition to the above-described microparticles, the positive electrode active material of the present disclosure comprises macroparticles having the average particle size D50 of 5 to 20 *µ*m in the form of secondary particles formed by agglomeration of primary microparticles having a smaller average particle size D50 than the primary macroparticles that form the microparticles.

The primary microparticles are a nickel-based lithium transition metal oxide positive electrode active material represented by LiₐNi_{1-b-c-d}Co_{b}Mn_{c}Q_{d}O_{2+δ} (1.0≤a≤1.5, 0<b≤0.5, 0<c≤0.5, 0≤d≤0.1, 0<b+c+d≤0.5, -0.1≤δ≤1.0, Q is at least one type of metal element selected from the group consisting of Al, Mg, V, Ti and Zr).

The average particle size D50 of the primary microparticles is smaller than the average particle size D50 of the primary macroparticles that form the microparticles, and in general, the average particle size D50 of the primary microparticles is at a few hundreds of nm level, for example, 100 to 900 nm, and in particular, 300 to 700 nm. On the other hand, the average particle size D50 of the macroparticles is 5 to 20 *µ*m that is larger than the average particle size D50 of the microparticles.

The macroparticles having the above-described size are particles commonly used as bimodal-type positive electrode active material macroparticles, and they are produced by the common manufacturing method as described below.

As described above, the macroparticles formed by agglomeration of the primary microparticles have a large specific surface area and a low particle strength. Accordingly, in the rolling process of electrodes using the conventional positive electrode active material comprising a mixture of macroparticles formed by agglomeration of primary microparticles and microparticles having a smaller average particle size than the macroparticles, severe cracking occurs in the macroparticles, causing the production of gas in large amounts during cell operation, resulting in low stability. Additionally, the optimal amount of conductive materials necessary for the macroparticles is different from the optimal amount of conductive materials necessary for the microparticles.

The inventors solve the problem by using the above-described microparticles together.

### Positive electrode active material comprising macroparticles and microparticles

In the positive electrode active material according to the present disclosure comprising the macroparticles having the above-described characteristics, the microparticles and the conductive material together, the average particle size D50 of the macroparticles : the average particle size D50 of the microparticles may be 5:1 to 2:1. Additionally, the microparticles may be present in an amount of 10 to 100 parts by weight based on 100 parts by weight of the macroparticles.

In addition to the macroparticles and the microparticles having the above-described characteristics, the positive electrode active material may further comprise positive electrode active material particles having a different average particle size without hindering achieving the objectives of the present disclosure.

### Positive electrode material mixture

The positive electrode material mixture according to the present disclosure comprises a conductive material.

The conductive material is used to give the conductive properties to the positive electrode, and may include, without limitation, any type of conductive material capable of conducting the flow of electrons without causing any chemical change in the battery. Specific examples of the conductive material may include at least one of graphite, for example, natural graphite or artificial graphite; carbon-based materials, for example, carbon black, acetylene black, ketjen black, channel black, furnace black, lamp black, thermal black and carbon fibers; metal powder or metal fibers, for example, copper, nickel, aluminum and silver; conductive whiskers, for example, zinc oxide and potassium titanate; conductive metal oxide, for example, titanium oxide; or conductive polymers, for example, polyphenylene derivatives. In general, the conductive material may be included in an amount of 1 to 30 weight% based on the total weight of the positive electrode material mixture.

Additionally, the positive electrode material mixture may comprise a binder.

The binder serves to improve the bonds between the positive electrode active material particles and the adhesion strength between the positive electrode active material and the positive electrode current collector. Specific examples of the binder may include, but is not limited to, at least one of polyvinylidene fluoride (PVDF), polyvinylidene fluoride-hexafluoropropylene copolymer (PVDF-co-HFP), polyvinylalcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or a variety of copolymers thereof. For example, the binder may be included in an amount of 1 to 30 weight% based on the total weight of the positive electrode material mixture.

### Positive electrode active material, positive electrode material mixture and method for manufacturing a positive electrode

The following is the method for producing nickel-based lithium transition metal oxide positive electrode active material microparticles according to an aspect of the present disclosure, in particular, microparticles formed by agglomeration of primary macroparticles. However, the present disclosure is not limited thereto.

The method for manufacturing a nickel-based lithium transition metal oxide positive electrode active material, for example, a compound represented by LiₐNi_{1-b-c-d}Co_{b}Mn_{c}Q_{d}O_{2+δ} (1.0≤a≤1.5, 0<b≤0.5, 0<c≤0.5, 0≤d≤0.1, 0<b+c+d≤0.5, -0.1≤δ≤1.0, Q is at least one type of metal element selected from the group consisting of Al, Mg, V, Ti and Zr) will be described by way of illustration.

A transition metal containing solution comprising nickel, cobalt, manganese and Q (Q is at least one type of metal element selected from the group consisting of Al, Mg, V, Ti and Zr) at a predetermined mole ratio, an ammonium cation containing chelating agent and a basic compound are mixed together and subjected to coprecipitation reaction to form transition metal hydroxide precursor particles, followed by separation and drying, and then the transition metal hydroxide precursor particles are milled to a predetermined average particle size D50 (S1).

Q is optional, and the detailed description is made based on the absence of Q.

The transition metal containing solution may be prepared by adding a nickel containing raw material, a cobalt containing raw material and a manganese containing raw material to a solvent, to be specific, water or a mixed solvent of water and an organic solvent (for example, alcohol, etc.) that mixes with water to form a homogeneous mixture, or may be prepared by mixing an aqueous solution of the nickel containing raw material, an aqueous solution of the cobalt containing raw material and the manganese containing raw material.

The nickel containing raw material may include, for example, nickel containing acetate, nitrate, sulfate, halide, sulfide, hydroxide, oxide or oxyhydroxide, and specifically, may include at least one of Ni(OH)₂, NiO, NiOOH, NiCO₃ · 2Ni(OH)₂ · 4H₂O, NiC₂O₂ · 2H₂O, Ni(NO₃)₂ · 6H₂O, NiSO₄, NiSO₄ · 6H₂O, an aliphatic nickel salt or nickel halide, but is not limited thereto.

The cobalt containing raw material may include cobalt containing acetate, nitrate, sulfate, halide, sulfide, hydroxide, oxide or oxyhydroxide, and specifically, may include at least one of Co(OH)₂, CoOOH, Co(OCOCH₃)₂ · 4H₂O, Co(NO₃)₂ · 6H₂O, CoSO₄ or Co(SO₄)₂ · 7H₂O, but is not limited thereto.

The manganese containing raw material may include, for example, at least one of manganese containing acetate, nitrate, sulfate, halide, sulfide, hydroxide, oxide or oxyhydroxide, and specifically, may include, for example, at least one of manganese oxide such as Mn₂O₃, MnO₂, Mn₃O₄; a manganese salt such as MnCO₃, Mn(NO₃)₂, MnSO₄, manganese acetate, a manganese salt of dicarboxylic acid, manganese citrate and an aliphatic manganese salt; manganese oxyhydroxide or manganese chloride, but is not limited thereto.

The ammonium cation containing chelating agent may include, for example, at least one of NH₄OH, (NH₄)₂SO₄, NH₄NO₃, NH₄Cl, CH₃COONH₄ or (NH₄)₂CO₃, but is not limited thereto. The ammonium cation containing chelating agent may be used in the form of an aqueous solution, and in this instance, a solvent may include water or a mixture of water and an organic solvent (specifically, alcohol, etc.) that mixes with water to form a homogeneous mixture.

The basic solution may be an aqueous solution of a basic compound, for example, at least one of a hydroxide or a hydrate of alkali metal or alkaline earth metal such as NaOH, KOH or Ca(OH)₂. In this instance, a solvent may include water, or a mixture of water and an organic solvent (specifically, alcohol, etc.) that mixes with water to form a homogeneous mixture.

The basic solution may be added to adjust the pH of the reactant solution, and may be added in such an amount that the pH of the total solution is 7 to 9.

The coprecipitation reaction may be performed at the temperature of 25°C to 60°C in an inert atmosphere of nitrogen or argon.

Subsequently, the milled transition metal hydroxide precursor particles are mixed with a lithium raw material and sintered in an oxygen atmosphere to produce core microparticles represented by LiₐNi_{1-b-c-d}Co_{b}Mn_{c}Q_{d}O_{2+δ} (1.0≤a≤1.5, 0<b≤0.5, 0<c≤0.5, 0≤d≤0.1, 0<b+c+d≤0.5, -0.1≤δ≤1.0, Q is at least one type of metal element selected from the group consisting of Al, Mg, V, Ti and Zr), formed by agglomeration by primary macroparticles having the average particle size D50 of 1 *µ*m or more (S2).

The core microparticles formed by agglomeration of the primary macroparticles having the predetermined average particle size may be produced by producing-milling-sintering the precursor particles according to the steps (S1) and (S2).

In the step (S2), the lithium raw material may include, without limitation, any type of lithium raw material that dissolves in water, and may include, for example, lithium containing sulfate, nitrate, acetate, carbonate, oxalate, citrate, halide, hydroxide or oxyhydroxide. Specifically, the lithium raw material may include at least one of Li₂CO₃, LiNO₃, LiNO₂, LiOH, LiOH · H₂O, LiH, LiF, LiCl, LiBr, LiI, CH₃COOLi, Li₂O, Li₂SO₄, CH₃COOLi, or Li₃C₆H₅O₇.

The high-Ni NCM based lithium composite transition metal oxide having the nickel (Ni) content of 80 mol% or more may be sintered at 790°C to 950°C, and the sintering may be performed for 5 to 35 hours under an oxygen atmosphere. The oxygen atmosphere as used herein comprises an ambient atmosphere and refers to an atmosphere comprising enough oxygen for sintering. In particular, the sintering is preferably performed in an atmosphere in which the partial pressure of oxygen is higher than the ambient atmosphere.

Subsequently, the core microparticles are mixed with a carbon material compound and milled to coat the carbon material compound on the surface of the core microparticles (S3). The step S3 may be performed at room temperature, and the positive electrode active material microparticles according to an aspect of the present disclosure may be produced by a simple process.

The microparticles having the above-described properties may be produced according to the steps S1 to S3.

The resultant microparticles are mixed with the macroparticles having the above-described properties to form a positive electrode active material mixture.

The macroparticles may include those available in the market, and may be directly produced using the known coprecipitation method. More specifically, they may be produced by obtaining, as the precursor, secondary particles made up of high-Ni composite transition metal hydroxide particles using the coprecipitation method commonly known in the technical field, mixing with a lithium source and sintering. Here, the method for controlling the precursor composition using the coprecipitation method and the type of the lithium source may follow the well-known technical knowledge.

The positive electrode active materials prepared as described above may be mixed with the conductive material that is the constituent of the positive electrode material mixture, to form the positive electrode material mixture, and the positive electrode material mixture may be placed on the positive electrode current collector by the common method to manufacture the positive electrode.

Specifically, the positive electrode material mixture comprising the positive electrode active materials and the conductive material is dispersed in a solvent to prepare a first positive electrode active material layer-forming composition, and the first positive electrode active material layer-forming composition is applied to the positive electrode current collector, followed by drying and rolling. The solvent may include solvents commonly used in the corresponding technical field, for example, at least one of dimethyl sulfoxide (DMSO), isopropyl alcohol, N-methylpyrrolidone (NMP), acetone or water. The solvent may be used in such an amount to have sufficient viscosity for good thickness uniformity when dissolving or dispersing the positive electrode active material, the conductive material and the binder and coating to manufacture the positive electrode in view of the slurry coating thickness and the production yield.

Alternatively, the positive electrode may be manufactured by casting the positive electrode active material layer-forming composition on a support, peeling off a film from the support and laminating the film on the positive electrode current collector.

The positive electrode current collector may include any type of material having conductive properties without causing any chemical change to the battery, for example, stainless steel, aluminum, nickel, titanium, sintered carbon, or aluminum or stainless steel treated with carbon, nickel, titanium or silver on the surface, but is not limited thereto. Additionally, the positive electrode current collector may be generally 3 to 500 *µ*m in thickness, and may have microtexture on the surface to improve the bonding strength of the positive electrode active material. For example, the positive electrode current collector may come in various forms, for example, films, sheets, foils, nets, porous bodies, foams and non-woven fabrics.

### Lithium secondary battery

According to another embodiment of the present disclosure, there is provided a lithium secondary battery comprising the positive electrode.

The lithium secondary battery comprises the positive electrode, a negative electrode opposite the positive electrode, a separator between the positive electrode and the negative electrode and an electrolyte, and the positive electrode is the same as described above. Additionally, optionally, the lithium secondary battery may further comprise a battery case accommodating an electrode assembly comprising the positive electrode, the negative electrode and the separator, and a sealing member to seal up the battery case.

In the lithium secondary battery, the negative electrode comprises a negative electrode current collector and a negative electrode active material layer on the negative electrode current collector.

The negative electrode current collector may include any type of material having high conductivity without causing any chemical change to the battery, for example, copper, stainless steel, aluminum, nickel, titanium, sintered carbon, or copper or stainless steel treated with carbon, nickel, titanium or silver on the surface and an aluminum-cadmium alloy, but is not limited thereto. Additionally, the negative electrode current collector may be generally 3 to 500 *µ*m in thickness, and in the same way as the positive electrode current collector, the negative electrode current collector may have microtexture on the surface to improve the bonding strength of the negative electrode active material. For example, the negative electrode current collector may come in various forms, for example, films, sheets, foils, nets, porous bodies, foams and non-woven fabrics.

In addition to the negative electrode active material, the negative electrode active material layer optionally comprises a binder and a conductive material. For example, the negative electrode active material layer may be formed by applying a negative electrode-forming composition comprising the negative electrode active material, and optionally the binder and the conductive material on the negative electrode current collector and drying, or by casting the negative electrode-forming composition on a support, peeling off a film from the support and laminating the film on the negative electrode current collector.

The negative electrode active material may include compounds capable of reversibly intercalating and deintercalating lithium. Specific examples of the negative electrode active material may include at least one of a carbonaceous material, for example, artificial graphite, natural graphite, graphitizing carbon fibers, amorphous carbon; a metallic compound that can form an alloy with lithium, for example, Si, Al, Sn, Pb, Zn, Bi, In, Mg, Ga, Cd, a Si alloy, a Sn alloy or an Al alloy; metal oxide capable of doping and undoping lithium such as SiOβ (0 < β < 2), SnO₂, vanadium oxide, lithium vanadium oxide; or a complex comprising the metallic compound and the carbonaceous material such as a Si-C complex or a Sn-C complex. Additionally, a metal lithium thin film may be used for the negative electrode active material. Additionally, the carbon material may include low crystalline carbon and high crystalline carbon. The low crystalline carbon typically includes soft carbon and hard carbon, and the high crystalline carbon typically includes high temperature sintered carbon, for example, amorphous, platy, flaky, spherical or fibrous natural graphite or artificial graphite, Kish graphite, pyrolytic carbon, mesophase pitch based carbon fibers, meso-carbon microbeads, mesophase pitches and petroleum or coal tar pitch derived cokes.

Additionally, the binder and the conductive material may be the same as those of the positive electrode described above.

On the other hand, in the lithium secondary battery, the separator separates the negative electrode from the positive electrode and provides a passage for movement of lithium ions, and may include, without limitation, any separator commonly used in lithium secondary batteries, and in particular, preferably, those having low resistance to the electrolyte ion movement and good electrolyte solution wettability. Specifically, the separator may include, for example, a porous polymer film made of a polyolefin-based polymer such as an ethylene homopolymer, a propylene homopolymer, an ethylene/butene copolymer, an ethylene/hexene copolymer and an ethylene/methacrylate copolymer or a stack structure of two or more porous polymer films. Additionally, the separator may include common porous non-woven fabrics, for example, non-woven fabrics made of high melting point glass fibers and polyethylene terephthalate fibers. Additionally, to ensure the heat resistance or mechanical strength, the coated separator comprising ceramics or polymer materials may be used, and may be selectively used with a single layer or multilayer structure.

Additionally, the electrolyte used in the present disclosure may include an organic liquid electrolyte, an inorganic liquid electrolyte, a solid polymer electrolyte, a gel polymer electrolyte, a solid inorganic electrolyte and a molten inorganic electrolyte, available in the manufacture of lithium secondary batteries, but is not limited thereto.

Specifically, the electrolyte may comprise an organic solvent and a lithium salt.

The organic solvent may include, without limitation, any type of organic solvent that acts as a medium for the movement of ions involved in the electrochemical reaction of the battery. Specifically, the organic solvent may include an ester-based solvent, for example, methyl acetate, ethyl acetate, γ-butyrolactone, ε-caprolactone; an ether-based solvent, for example, dibutyl ether or tetrahydrofuran; a ketone-based solvent, for example, cyclohexanone; an aromatic hydrocarbon-based solvent, for example, benzene, fluorobenzene; a carbonate-based solvent, for example, dimethylcarbonate (DMC), diethylcarbonate (DEC), methylethylcarbonate (MEC), ethylmethylcarbonate (EMC), ethylene carbonate (EC), propylene carbonate (PC); an alcohol-based solvent, for example, ethylalcohol, isopropyl alcohol; nitriles of R-CN (R is a C2 to C20 straight-chain, branched-chain or cyclic hydrocarbon, and may comprise an exocyclic double bond or ether bond); amides, for example, dimethylformamide; dioxolanes, for example, 1,3-dioxolane; or sulfolanes. Among them, the carbonate-based solvent is desirable, and more preferably, a cyclic carbonate (for example, ethylene carbonate or propylene carbonate) having high ionic conductivity and a high dielectric constant which contributes to the improved charge/discharge performance of the battery may be mixed with a linear carbonate-based compound (for example, ethylmethyl carbonate, dimethyl carbonate or diethyl carbonate) of low viscosity. In this case, the cyclic carbonate and the chain carbonate may be mixed at a volume ratio of about 1:1 to about 1:9 to improve the performance of the electrolyte solution.

The lithium salt may include, without limitation, any compound that can provide lithium ions used in lithium secondary batteries. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI or LiB(C₂O₄)₂. The concentration of the lithium salt may range from 0.1 to 2.0M. When the concentration of the lithium salt is included in the above-described range, the electrolyte has the optimal conductivity and viscosity, resulting in good performance of the electrolyte and effective movement of lithium ions.

In addition to the above-described constituent substances of the electrolyte, the electrolyte may further comprise, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride to improve the life characteristics of the battery, prevent the capacity fading of the battery and improve the discharge capacity of the battery. In this instance, the additive may be included in an amount of 0.1 to 5 weight% based on the total weight of the electrolyte.

The secondary battery with the reduced degradation of the positive electrode material according to the present disclosure is useful in the field of mobile devices including mobile phones, laptop computers and digital cameras, and electric vehicles including hybrid electric vehicles (HEVs).

Accordingly, according to another embodiment of the present disclosure, there are provided a battery module comprising the lithium secondary battery as a unit cell and a battery pack comprising the same.

The battery module or the battery pack may be used as a power source of at least one medium- and large-scale device of power tools; electric vehicles including electric vehicles (EVs), hybrid electric vehicles, and plug-in hybrid electric vehicles (PHEVs); or energy storage systems.

Hereinafter, the embodiment of the present disclosure will be described in sufficiently detail for those having ordinary skill in the technical field pertaining to the present disclosure to easily practice the present disclosure.

### <Example 1>

### Production of macroparticles

Secondary particles made up of high-Ni composite transition metal hydroxide particles are obtained as a precursor using the coprecipitation method known in the corresponding technical field and mixed with a lithium source, and then sintered to prepare LiNi_{0.8}Co_{0.1}Mn_{0.1}O₂ macroparticles in the form of secondary particles having the average particle size D50 of 15 *µ*m formed by agglomeration of primary microparticles having the average particle size D50 of 500 nm.

### Production of microparticles

4 liters of distilled water is put into a coprecipitation reactor (capacity 20L), in which the temperature is maintained at 50°C, and a 3.2 mol/L transition metal solution in which NiSO₄, CoSO₄ and MnSO₄ are mixed at a mole ratio of nickel:cobalt:manganese of 0.8:0.1:0.1 and a 28 weight% ammonia aqueous solution are continuously added to the reactor at 300 mL/hr and 42 mL/hr, respectively. Stirring is performed at the impeller speed of 400 rpm, and a 40 wt% sodium hydroxide solution is used to maintain the pH at 9. Precursor particles are formed by 10-hour coprecipitation reaction. The precursor particles are separated, washed and dried in an oven of 130°C to prepare a precursor.

The Ni_{0.8}Co_{0.1}Mn_{0.1}(OH)₂ precursor synthesized by the coprecipitation reaction is put into a mixer to mill to a size of about 1 *µ*m, and the milled precursor is mixed with LiOH at a mole ratio of 1.05 and thermally treated at 850°C in an oxygen atmosphere for 15 hours to produce LiNi_{0.8}Co_{0.1}Mn_{0.1}O₂ lithium composite transition metal oxide core microparticles in the form of secondary particles.

The obtained core microparticles and ketjen black are mixed at a weight ratio of 99 : 1, and the mixture is put into a Nobilta mixer to mill at the rotational speed of 3000 rpm for 10 minutes, to produce positive electrode active material microparticles having the ketjen black carbon material (1 part by weight based on 100 parts by weight of the primary macroparticles) coating on the surface of the core microparticles.

The obtained core microparticles are particles having the carbon material coating layer on the particles having the average particle size D50 of 4 *µ*m formed by agglomeration of primary macroparticles having the average crystallite size of 250 nm and the average particle size D50 of 1 *µ*m.

### Positive electrode active material, positive electrode and manufacture of a secondary battery

98 parts by weight of positive electrode active material comprising a mixture of the macroparticles and the microparticles obtained by the above-described method at a weight ratio of 7:3, 1 part by weight of ketjen black as a conductive material and 1 part by weight of PVDF as a binder are dispersed in a solvent to prepare a positive electrode active material-forming composition and the positive electrode active material-forming composition is applied to an aluminum foil current collector, followed by drying and rolling to manufacture a positive electrode.

A mixture of artificial graphite and natural graphite at a mix ratio of 5:5 as a negative electrode active material, super C as a conductive material, and SBR/CMC as a binder are mixed at a weight ratio of 96:1:3 to prepare a negative electrode slurry, and the negative electrode slurry is applied on a surface of a copper current collector, followed by drying and rolling to manufacture a negative electrode.

An electrode assembly comprising the positive electrode and the negative electrode manufactured as described above and a porous polyethylene separator between the positive electrode and the negative electrode is made and placed in a case, and an electrolyte solution is injected into the case to manufacture a lithium secondary battery full cell.

In this instance, the electrolyte solution is prepared by dissolving 1.0M lithiumhexafluorophosphate (LiPF₆) in an organic solvent comprising ethylenecarbonate/ethylmethylcarbonate/diethylcarbonate/(a mix volume ratio of EC/EMC/DEC=3/4/3).

### <Example 2>

A lithium secondary battery full cell is manufactured by the same method as example 1, except that the coprecipitation reaction time is 15 hours when forming the precursor particles for the production of the microparticles.

### <Comparative example 1>

A lithium secondary battery full cell is manufactured by the same method as example 1, except that microparticles having no carbon material coating layer are used and the amount of the conductive material is 1.3 weight% based on the total weight of the positive electrode material mixture.

### [Experimental example 1: Average particle size]

D50 may be defined as a particle size at 50% of particle size distribution, and is measured using a laser diffraction method.

### [Experimental example 2: Average crystallite size of primary particles]

The sample is measured using Bruker Endeavor (Cu Kα, λ= 1.54 A°) equipped with LynxEye XE-T position sensitive detector with the step size of 0.02° in the scan range of 90° FDS 0.5°, 2-theta 15°, to make the total scan time of 20 min.

Rietveld refinement of the measured data is performed, considering the charge at each site (metals at transition metal site +3, Ni at Li site +2) and cation mixing. In crystallite size analysis, instrumental broadening is considered using Fundamental Parameter Approach (FPA) implemented in Bruker TOPAS program, and in fitting, all peaks in the measurement range are used. The peak shape fitting is only performed using Lorentzian contribution to First Principle (FP) among peak types available in TOPAS, and in this instance, strain is not considered.

### [Experimental example 3. Measurement of life characteristics]

For the lithium secondary battery full cell manufactured according to example and comparative example, the capacity retention and the resistance increase in 400 cycles is measured by the following method.

The manufactured lithium secondary battery full cell is charged at 0.5C in CC-CV mode at 45°C until 4.2V and discharged at a constant current of 1C until 3.0V, and after this charge/discharge test is repeated 400 cycles, the capacity retention and the resistance increase are measured to evaluate the life characteristics.

**[Table 1]**

| | Unit | Comparative example 1 | Example 1 | Example 2 |
|---|---|---|---|---|
| Capacity retention (400 cycle) | % | 90 | 94 | 92 |
| Resistance increase (400 cycle) | % | 100 | 35 | 55 |

As can be seen from Table 1, it can be seen that in the case of examples 1 and 2, both the capacity retention and the resistance increase are superior to those of comparative example 1.

### [Experimental example 4. Comparison of distribution of electrical conductivity in positive electrode]

The positive electrode of the lithium secondary battery manufactured according to example and comparative example undertakes Scanning Spreading Resistance Microscopy (SSRM) analysis after cross section processing.

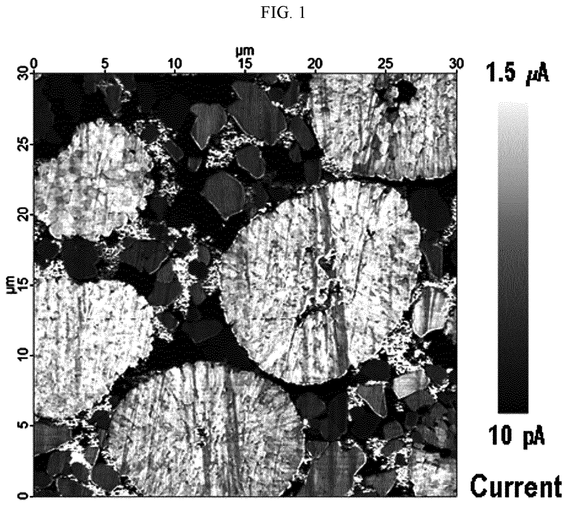

FIG. 1 shows the analysis results of comparative example 1, and it can be seen that the macroparticles are brighter in color than the microparticles, revealing the flow of a larger amount of currents than the microparticles, and there is a large resistance difference between the macroparticles and the microparticles due to the lower resistance of the macroparticles than the microparticles.

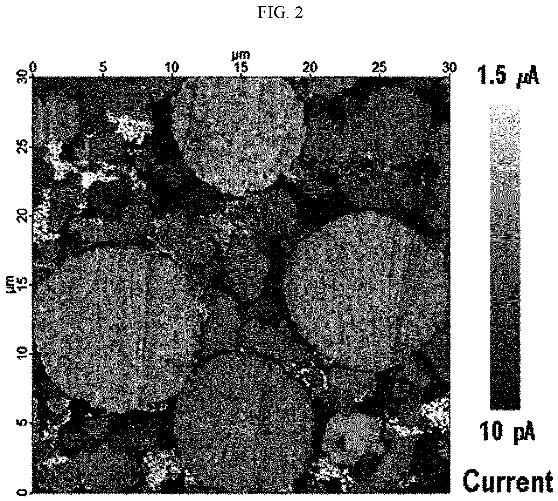

FIG. 2 shows the analysis results of example 1, and it can be seen that compared to FIG. 1, the macroparticles are darker and there is a smaller difference in brightness between the macroparticles and the microparticles, revealing a smaller difference in the flow of currents in the macroparticles and the microparticles or a smaller difference in the resistance between the macroparticles and the microparticles.

## Claims

1. A positive electrode active material for a lithium secondary battery, comprising:
a mixture of microparticles having a predetermined average particle size (D50) and macroparticles having a larger average particle size (D50) than the microparticles,
wherein the microparticles have the average particle size (D50) of 1 to 10 µm and are at least one selected from the group consisting of particles having a carbon material coating layer on all or part of a surface of primary macroparticles having an average particle size (D50) of 1 µm or more, particles having a carbon material coating layer on all or part of a surface of secondary particles formed by agglomeration of the primary macroparticles, and a mixture thereof,
the macroparticles are secondary particles having an average particle size (D50) of 5 to 20 µm formed by agglomeration of primary microparticles having a smaller average particle size (D50) than the primary macroparticles, and
the primary macroparticles and the primary microparticles comprise a nickel-based lithium transition metal oxide,
wherein D50 corresponds to 50% of cumulative volume as determined in accordance with the description.

2. The positive electrode active material for a lithium secondary battery according to claim 1, wherein the average particle size (D50) of the primary macroparticles is 1 to 3 µm, and the average particle size (D50) of the microparticles is 3 to 8 µm.

3. The positive electrode active material for a lithium secondary battery according to claim 1, wherein an average crystallite size of the primary macroparticles is 150 nm or more as determined in accordance with the description.

4. The positive electrode active material for a lithium secondary battery according to claim 1, wherein the average particle size (D50) of the primary microparticles is 100 to 900 nm.

5. The positive electrode active material for a lithium secondary battery according to claim 1, wherein the average particle size (D50) of the macroparticles : the average particle size (D50) of the microparticles is 5: 1 to 2:1.

6. The positive electrode active material for a lithium secondary battery according to claim 1, wherein the microparticles are present in an amount of 10 to 100 parts by weight based on 100 parts by weight of the macroparticles.

7. The positive electrode active material for a lithium secondary battery according to claim 1, wherein the carbon material coating layer is present in an amount of 0.05 to 10 parts by weight based on 100 parts by weight of the primary macroparticles.

8. The positive electrode active material for a lithium secondary battery according to claim 1, wherein the nickel-based lithium transition metal oxide is represented by LiₐNi_{1-b-c-d}Co_{b}Mn_{c}Q_{d}O_{2+δ} (1.0≤a≤1.5, 0<b≤0.5, 0<c≤0.5, 0≤d≤0.1, 0<b+c+d≤0.5, -0.1≤δ≤1.0, Q is at least one type of metal element selected from the group consisting of Al, Mg, V, Ti and Zr.

9. A positive electrode material mixture for a lithium secondary battery, comprising:
the positive electrode active material for a lithium secondary battery according to any one of claims 1 to 8; and
a conductive material.

10. The positive electrode material mixture for a lithium secondary battery according to claim 9, wherein the conductive material is present in an amount of 1 to 30 weight% based on the total weight of the positive electrode material mixture.

11. A positive electrode for a lithium secondary battery comprising the positive electrode material mixture according to claim 10.

12. A lithium secondary battery comprising the positive electrode according to claim 11.

## Patentansprüche

1. Aktives Material einer positiven Elektrode für eine Lithiumsekundärbatterie, umfassend:
ein Gemisch aus Mikropartikeln, die eine vorbestimmte mittlere Partikelgröße (D50) aufweisen, und Makropartikeln, die eine größere mittlere Partikelgröße (D50) als die Mikropartikel aufweisen,
wobei die Mikropartikel die mittlere Partikelgröße (D50) von 1 bis 10 µm aufweisen und mindestens eines ausgewählt aus der Gruppe bestehend aus Partikeln sind, die eine Beschichtungsschicht aus Kohlenstoffmaterial auf der gesamten oder einem Teil einer Oberfläche von primären Makropartikeln, die eine mittlere Partikelgröße (D50) von 1 µm oder mehr aufweisen, Partikeln, die eine Beschichtungsschicht aus Kohlenstoffmaterial auf der gesamten oder einem Teil einer Oberfläche von durch Agglomeration der primären Makropartikel gebildeten Sekundärpartikeln und ein Gemisch davon aufweisen,
die Makropartikel Sekundärpartikel sind, die eine mittlere Partikelgröße (D50) von 5 bis 20 µm aufweisen, die durch Agglomeration von primären Mikropartikeln gebildet sind, die eine kleinere mittlere Partikelgröße (D50) als die primären Makropartikel aufweisen, und
die primären Makropartikel und die primären Mikropartikel ein Lithium-Übergangsmetalloxid auf Nickelbasis umfassen,
wobei D50, wie gemäß der Beschreibung bestimmt, 50 % des kumulativen Volumens entspricht.

2. Aktives Material einer positiven Elektrode für eine Lithiumsekundärbatterie nach Anspruch 1, wobei die mittlere Partikelgröße (D50) der primären Makropartikel 1 bis 3 µm beträgt und die mittlere Partikelgröße (D50) der Mikropartikel 3 bis 8 µm beträgt.

3. Aktives Material einer positiven Elektrode für eine Lithiumsekundärbatterie nach Anspruch 1, wobei eine mittlere Kristallitgröße der primären Makropartikel, wie gemäß der Beschreibung bestimmt, 150 nm oder mehr beträgt.

4. Aktives Material einer positiven Elektrode für eine Lithiumsekundärbatterie nach Anspruch 1, wobei die mittlere Partikelgröße (D50) der primären Mikropartikel 100 bis 900 nm beträgt.

5. Aktives Material einer positiven Elektrode für eine Lithiumsekundärbatterie nach Anspruch 1, wobei die mittlere Partikelgröße (D50) der Makropartikel: die mittlere Partikelgröße (D50) der Mikropartikel 5:1 bis 2:1 beträgt.

6. Aktives Material einer positiven Elektrode für eine Lithiumsekundärbatterie nach Anspruch 1, wobei die Mikropartikel in einer Menge von 10 bis 100 Gewichtsteilen, bezogen auf 100 Gewichtsteile der Makropartikel, vorhanden sind.

7. Aktives Material einer positiven Elektrode für eine Lithiumsekundärbatterie nach Anspruch 1, wobei die Beschichtungsschicht aus Kohlenstoffmaterial in einer Menge von 0,05 bis 10 Gewichtsteilen, bezogen auf 100 Gewichtsteile der primären Makropartikel, vorhanden ist.

8. Aktives Material einer positiven Elektrode für eine Lithiumsekundärbatterie nach Anspruch 1, wobei das Lithium-Übergangsmetalloxid auf Nickelbasis durch LiₐNi_{1-b-c-d}Co_{b}Mn_{c}Q_{d}O_{2+δ} (1,0 ≤ a ≤ 1,5, 0 < b ≤ 0,5, 0 < c ≤ 0,5, 0 ≤ d ≤ 0,1, 0 < b + c + d ≤ 0,5, -0,1 ≤ δ ≤ 1,0 dargestellt ist, Q mindestens eine Art von Metallelement ist, das aus der Gruppe bestehend aus Al, Mg, V, Ti und Zr ausgewählt ist.

9. Materialgemisch einer positiven Elektrode für eine Lithiumsekundärbatterie, umfassend:
das aktive Material einer positiven Elektrode für eine Lithiumsekundärbatterie nach einem der Ansprüche 1 bis 8; und
ein leitfähiges Material.

10. Materialgemisch einer positiven Elektrode für eine Lithiumsekundärbatterie nach Anspruch 9, wobei das leitfähige Material in einer Menge von 1 bis 30 Gew.-%, bezogen auf das Gesamtgewicht des Materialgemisches einer positiven Elektrode, vorhanden ist.

11. Positive Elektrode für eine Lithiumsekundärbatterie, umfassend das Materialgemisch einer positiven Elektrode nach Anspruch 10.

12. Lithiumsekundärbatterie, umfassend die positive Elektrode nach Anspruch 11.

## Revendications

1. Matériau actif d'électrode positive pour une batterie secondaire au lithium, comprenant :
un mélange de microparticules présentant une taille moyenne de particule (D50) prédéterminée et de macroparticules présentant une taille moyenne de particule (D50) plus grande que celle des microparticules,
dans lequel les microparticules présentent la taille moyenne de particule (D50) de 1 µm à 10 µm et sont au moins un choisi parmi le groupe consistant en des particules présentant une couche de revêtement de matériau carboné sur la totalité ou une partie d'une surface de macroparticules primaires présentant une taille moyenne de particule (D50) de 1 µm ou plus, les particules présentant une couche de revêtement de matériau carboné sur la totalité ou une partie d'une surface de particules secondaires formées par agglomération des macroparticules primaires, et d'un mélange de celles-ci,
les macroparticules sont des particules secondaires présentant une taille moyenne de particule (D50) de 5 µm à 20 µm formées par agglomération de microparticules primaires présentant une taille moyenne de particule (D50) plus petite que celle des macroparticules primaires, et
les macroparticules primaires et les microparticules primaires comprennent un oxyde de métal de transition de lithium à base de nickel,
dans lequel D50 correspond à 50 % du volume cumulé tel que déterminé conformément à la description.

2. Matériau actif d'électrode positive pour une batterie secondaire au lithium selon la revendication 1, dans lequel la taille moyenne de particule (D50) des macroparticules primaires est de 1 µm à 3 µm, et la taille moyenne de particule (D50) des microparticules est de 3 µm à 8 µm.

3. Matériau actif d'électrode positive pour une batterie secondaire au lithium selon la revendication 1, dans lequel une taille de cristallite moyenne des macroparticules primaires est de 150 nm ou plus telle que déterminée conformément à la description.

4. Matériau actif d'électrode positive pour une batterie secondaire au lithium selon la revendication 1, dans lequel la taille moyenne de particule (D50) des microparticules primaires est de 100 nm à 900 nm.

5. Matériau actif d'électrode positive pour une batterie secondaire au lithium selon la revendication 1, dans lequel le rapport entre la taille moyenne de particule (D50) des macroparticules et la taille moyenne de particule (D50) des microparticules est de 5:1 à 2:1.

6. Matériau actif d'électrode positive pour une batterie secondaire au lithium selon la revendication 1, dans lequel les microparticules sont présentes en une quantité de 10 parties en poids à 100 parties en poids sur la base de 100 parties en poids des macroparticules.

7. Matériau actif d'électrode positive pour une batterie secondaire au lithium selon la revendication 1, dans lequel la couche de revêtement de matériau carboné est présente en une quantité de 0,05 partie en poids à 10 parties en poids sur la base de 100 parties en poids des macroparticules primaires.

8. Matériau actif d'électrode positive pour une batterie secondaire au lithium selon la revendication 1, dans lequel l'oxyde de métal de transition de lithium à base de nickel est représenté par LiₐNi_{1-b-c-d}Co_{b}Mn_{c}Q_{d}O_{2+δ} (1,0 ≤ a ≤ 1,5, 0 < b ≤ 0,5, 0 < c ≤ 0,5, 0 ≤ d ≤ 0,1, 0 < b + c + d ≤ 0,5, -0,1 ≤ δ ≤ 1,0, Q est au moins un type d'élément métallique choisi dans le groupe consistant en Al, Mg, V, Ti et Zr.

9. Mélange de matériau d'électrode positive pour une batterie secondaire au lithium, comprenant :
le matériau actif d'électrode positive pour une batterie secondaire au lithium selon l'une quelconque des revendications 1 à 8 ; et
un matériau conducteur.

10. Mélange de matériau d'électrode positive pour une batterie secondaire au lithium selon la revendication 9, dans lequel le matériau conducteur est présent en une quantité de 1 % en poids à 30 % en poids sur la base du poids total du mélange de matériau d'électrode positive.

11. Électrode positive pour une batterie secondaire au lithium comprenant le mélange de matériau d'électrode positive selon la revendication 10.

12. Batterie secondaire au lithium comprenant l'électrode positive selon la revendication 11.
